# EUROPÄISCHE PATENTSCHRIFT

(11) **EP 4 087 442 B1**
(45) Veröffentlichungstag und Bekanntmachung des Hinweises auf die Patenterteilung: **25.06.2025**
(21) Anmeldenummer: 20842583.5
(22) Anmeldetag: 28.12.2020
(51) Int. Cl.: A46B 3/04, A46B 3/20, A46B 9/02

(54) **INTERDENTAL-REINIGER**
INTERDENTAL CLEANER
DISPOSITIF DE NETTOYAGE INTERDENTAIRE

(30) Priorität: 08.01.2020 DE 102020100234
(43) Veröffentlichungstag der Anmeldung: 16.11.2022
(73) Patentinhaber: Interbros GmbH, 79677 Schönau (DE)
(72) Erfinder: BUTZ, Jürgen, 79694 Utzenfeld (DE)
(74) Vertreter: Lichti - Patentanwälte Partnerschaft mbB
(86) Internationale Anmeldenummer: PCT/EP2020/087931
(87) Internationale Veröffentlichungsnummer: WO 2021/140040

(56) Entgegenhaltungen:
- EP-A2- 2 064 968
- WO-A1-2014/023395
- WO-A2-2009/137259

## Beschreibung

Die Erfindung betrifft einen Interdental-Reiniger mit einem stabförmigen, aus Kunststoff bestehenden Träger, der in einem axialen Endbereich eine Reinigungseinrichtung aufweist, die einen aus einem weich-elastischen Kunststoff bestehenden Überzug des Trägers und einen Borstenbesatz mit mehreren mit radialer Komponente vom Überzug hervorstehenden Borstenbündeln aufweist, wobei die Borstenbündel den Träger durchdringen und in diesem eingebettet und gehalten sind.

Aus der WO2014/023395 A1 ist ein Interdental-Reiniger mit einem entsprechenden Aufbau bekannt. Ein derartiger Interdental-Reiniger besitzt einen stabförmigen Träger aus Kunststoff, der an seinem einen Ende ein Griffteil und an seinem axial entgegengesetzten Ende eine Reinigungseinrichtung trägt. Die Reinigungseinrichtung umfasst einen hülsenförmigen Überzug des Trägers aus einem weich-elastischen Kunststoff, beispielsweise einem thermoplastischen Elastomer, das auf den Träger aufgespritzt ist. Der Überzug besitzt auf seiner Außenseite eine Strukturierung in Form von sich radial nach außen erstreckenden Fingern oder Noppen.

Darüber hinaus umfasst die Reinigungseinrichtung einen Borstenbesatz mit mehreren mit radialer Komponente vom Überzug hervorstehenden Borstenbündeln. Die Borstenbündel sind in das Kunststoffmaterial des Trägers eingebettet und in diesem gehalten.

Der Begriff "axial" bezeichnet in dieser Beschreibung eine Richtung entlang einer Längsachse des stabförmigen Trägers und somit des Interdental-Reinigers oder parallel dazu. Der Begriff "radial" bezeichnet eine senkrecht zur Längsachse des Interdental-Reinigers verlaufende Richtung.

Mit dem Begriff "Borstenbündel" sind erfindungsgemäß üblicherweise Bündel aus einer Vielzahl von vorzugsweise gleichartigen Borsten gemeint. Mit diesem Begriff soll jedoch auch umfasst sein, wenn ein Borstenbündel nur wenige Borsten umfasst oder sogar nur aus einer einzelnen Borste besteht.

Borsten im Sinne der Erfindung sind vorzugsweise dünne vorgefertigte Abschnitte eines aus Kunststoff bestehenden Monofilamentes oder Multifilamentes, die einen maximalen Durchmesser von 0,25mm aufweisen.

Zur Herstellung des Interdental-Reinigers werden zunächst die Borstenbündel in eine Kavität eines Spritzgusswerkzeugs eingelegt und anschließend wird das Kunststoffmaterial des Trägers eingespritzt, wobei die Borstenbündel umspritzt und so in den Träger eingebettet werden, dass sie vorzugsweise auf entgegengesetzten Seiten radial oder mit radialer Komponente aus dem Träger hervorstehen.

In einem 2. Verfahrensschritt wird dann das weich-elastische Kunststoffmaterial zur Bildung des Überzugs und der Strukturierung auf den Träger aufgespritzt. Dabei ist es notwendig, die Borstenbündel abzudichten, damit das weich-elastische Kunststoffmaterial nicht in Längsrichtung der Borstenbündel austritt. Diese Abdichtung wird durch eine von außen auf die Borstenbündel einwirkende Klemm- oder Spannkraft erreicht. Dabei ist jedoch das Problem gegeben, dass eine hohe Spannkraft zwar eine sichere Abdichtung der Borstenbündel gewährleistet, jedoch besteht dabei die Gefahr, dass die einzelnen Borsten des Borstenbündels gequetscht und deformiert werden. Wenn die Spannkraft verringert wird, um eine Beschädigung der einzelnen Borsten des Borstenbündels zu vermeiden, besteht die Gefahr, dass keine ausreichende Abdichtung gegeben ist und das weich-elastische Kunststoffmaterial in unerwünschter Weise austritt.

Der Erfindung liegt die Aufgabe zugrunde, einen Interdental-Reiniger der genannten Art zu schaffen, bei dem das weich-elastische Kunststoffmaterial zur Bildung des Überzugs aufgespritzt werden kann, ohne dass die Gefahr eines unerwünschten Austretens des Kunststoffmaterials im Bereich der Borstenbündel besteht.

Diese Aufgabe wird erfindungsgemäß durch einen Interdental-Reiniger mit den Merkmalen des Anspruchs 1 gelöst. Dabei ist vorgesehen, dass der Überzug auf seiner Außenoberfläche zumindest eine Ausnehmung aufweist und dass zumindest eines der Borstenbündel innerhalb der Ausnehmung angeordnet ist. Die Ausnehmung erstreckt sich vorzugsweise bis zum Träger.

Erfindungsgemäß wird von der Grundüberlegung ausgegangen, das weich-elastische Kunststoffmaterial nicht bis an die Borstenbündel heranreichen zu lassen, sondern in dem Überzug eine Ausnehmung in Form eines Loches oder einer Durchbrechung auszubilden und das oder die Borstenbündel innerhalb der Ausnehmung anzuordnen. Auf diese Weise ist das Borstenbündel nur innerhalb des Trägers gehalten und nicht in das Kunststoffmaterial des Überzugs eingebettet. Zum Aufspritzen des Kunststoffmaterial des Überzugs ist es somit möglich, nicht gegenüber dem Borstenbündel, sondern gegenüber dem Träger abzudichten. Da der Träger üblicherweise aus einem formstabilen, relativ harten Kunststoffmaterial besteht, ist eine sehr gute Abdichtung zu erreichen.

Erfindungsgemäß ist vorgesehen, dass das Borstenbündel in einem Abstand von dem Rand der Ausnehmung angeordnet ist, d.h. mit dem weich-elastischen Kunststoffmaterial, das den Überzug bildet, nicht in Kontakt kommt. Auf diese Weise ist ausreichend Platz für die Erzielung einer guten Abdichtung beim Aufspritzen des Überzugs gewährleistet.

In einer möglichen Ausgestaltung kann vorgesehen sein, dass die Ausnehmung leer ist, d.h. einen Freiraum bildet, so dass die Seitenwand oder die Seitenwände der Ausnehmung von dem Material des Überzugs und der Boden der Ausnehmung von der Außenoberfläche des Trägers gebildet ist.

In alternativer Ausgestaltung der Erfindung kann aber auch vorgesehen sein, dass die Ausnehmung zumindest teilweise und insbesondere vollständig von einem radialen Ansatz des Trägers ausgefüllt ist. Der Ansatz besteht aus dem gleichen Kunststoffmaterial wie der Träger und ist einstückig mit diesem verbunden.

Auf der radialen Außenseite des Überzugs kann der Ansatz bündig mit der Außenoberfläche des Überzugs abschließen, alternativ kann jedoch auch vorgesehen sein, dass der Ansatz des Trägers aus der Ausnehmung radial hervorsteht. Auf diese Weise ist erreicht, dass das Borstenbündel über einen relativ großen Bereich im Kunststoffmaterial des Trägers eingebettet ist und somit sehr sicher gehalten ist.

Vorzugsweise besitzt der Überzug mehrere Ausnehmungen der genannten Art, wobei vorgesehen sein kann, dass in zumindest einigen Ausnehmungen und vorzugsweise in jeder Ausnehmung nur ein einzelnes Borstenbündel angeordnet ist.

Alternativ kann vorgesehen sein, dass in zumindest einer Ausnehmung und vorzugsweise in jeder Ausnehmung jeweils mehrere Borstenbündel angeordnet sind, wobei die Borstenbündel dann vorzugsweise voneinander beabstandet sind.

Das oder die Borstenbündel sind vorzugsweise so angeordnet, dass das Borstenbündel den Träger durchdringt und auf entgegengesetzten Seiten radial aus diesem hervorsteht. Vorzugsweise ist das Borstenbündel auf seinen diametral entgegengesetzten Seiten in jeweils einer Ausnehmung angeordnet, d.h. die Ausnehmungen sind vorzugsweise auf diametral entgegengesetzten Seiten des Überzugs ausgebildet.

In bevorzugter Ausgestaltung der Erfindung ist vorgesehen, dass zumindest eine der Ausnehmungen und vorzugsweise mehrere oder sogar alle Ausnehmungen linienförmig ausgebildet sind und sich in Längsrichtung des Trägers erstrecken. Der Begriff "linienförmig" kann dabei bedeuteten, dass die Ausnehmung geradlinig in Längsrichtung des Trägers verläuft, alternativ kann jedoch auch vorgesehen sein, dass die langgestreckte Ausnehmung in sich abgewinkelt ist, d.h. einen unstetigen Verlauf aufweist oder wendelförmig um den Träger umläuft.

Die Reinigungseinrichtung kann zusätzlich mehrere mit radialer Komponente vom Überzug hervorstehende Finger, Noppen oder Lamellen aufweisen, die vorzugsweise einstückig mit dem Überzug ausgebildet sind und aus dem gleichen weich-elastischen Material wie dieser bestehen.

Weitere Einzelheiten und Merkmale der Erfindung sind aus der folgenden Beschreibung von Ausführungsbeispielen unter Bezugnahme auf die Zeichnung ersichtlich. Es zeigen:
Fig. 1 Eine perspektivische Darstellung eines erfindungsgemäßen Interdental-Reinigers,
Fig. 2 eine vergrößerte Darstellung des vorderen Endes des Interdental-Reinigers gemäß Figur 1,
Fig. 3 den Schnitt III-III in Figur 2,
Fig. 4 eine 1. Abwandlung der Ausführung gemäß Figur 3,
Fig. 5 eine 2. Abwandlung der Ausführung gemäß Figur 3,
Fig. 6 das vordere Ende des Interdental-Reinigers gemäß einem 2. Ausführungsbeispiel und
Fig. 7 das vordere Ende eines Interdental-Reinigers gemäß einem 3. Ausführungsbeispiel.

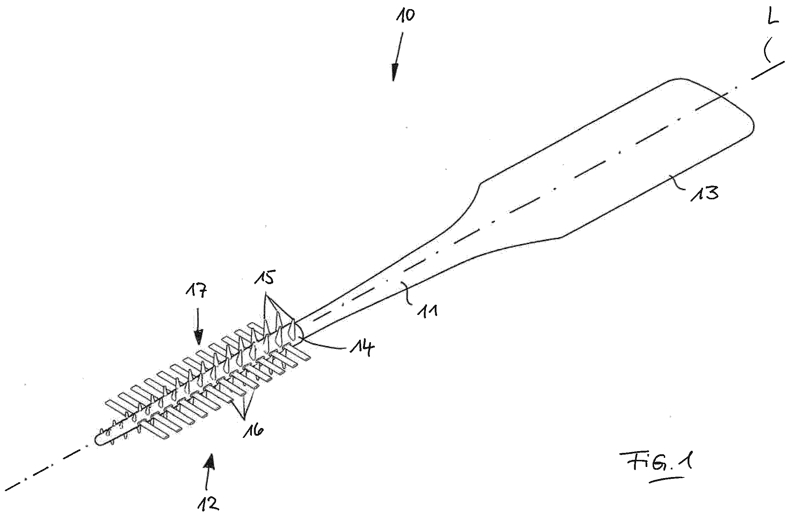

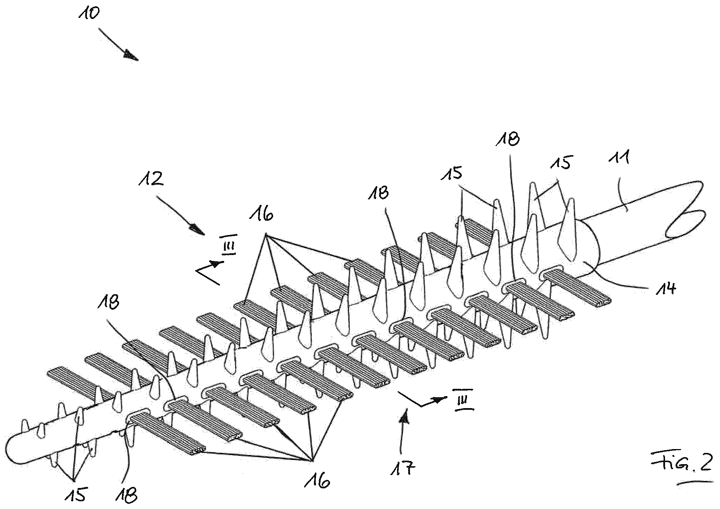

Die Figuren 1 und 2 zeigen eine perspektivische Darstellung eines Interdental-Reinigers 10, der einen aus Kunststoff bestehenden stabförmigen Träger 11 besitzt. Am hinteren, gemäß Figur 1 rechten Ende des stabförmigen Trägers 11 ist ein Griffabschnitt 13 ausgebildet, an dem ein Benutzer den Interdental-Reiniger 10 ergreifen kann. An dem dem Griffabschnitt 13 axial entgegengesetzten vorderen, gemäß Figur 1 linken Ende ist auf den stabförmigen Träger 11 eine Reinigungseinrichtung 12 aufgebracht. Die Reinigungseinrichtung 12 weist einen hülsenförmigen Überzug 14 des Trägers 11 und einen Borstenbesatz 17 auf. Der Überzug 14 besteht aus einem weich-elastischen Kunststoff und ist auf den Träger aufgespritzt. Der Borstenbesatz 17 besteht aus einer Vielzahl von Borstenbündeln 16, die sich im dargestellten Ausführungsbeispiel radial zu einer Längsachse L des Trägers 11 erstrecken und alle auf Abstand parallel nebeneinander angeordnet sind. Jedoch sind auch andere Ausrichtungen und gegenseitige Anordnungen der Borstenbündel möglich.

Jedes Borstenbündel durchdringt den Träger 11 und ist in das Material des Trägers 11 eingebettet und in diesem gehalten. Darüber hinaus steht jedes Borstenbündel 16 auf diametral entgegengesetzten Seiten des Trägers 11 aus diesem radial hervor.

Auf der Außenseite des Überzugs 14 sind mehrere radial nach außen hervorstehende, frei auskragende Finger 15 angeformt, die aus dem gleichen Material wie der Überzug 14 bestehen und einstückig mit diesem ausgebildet sind. Die Finger 15 besitzen eine sich radial nach außen verjüngende Kegelform.

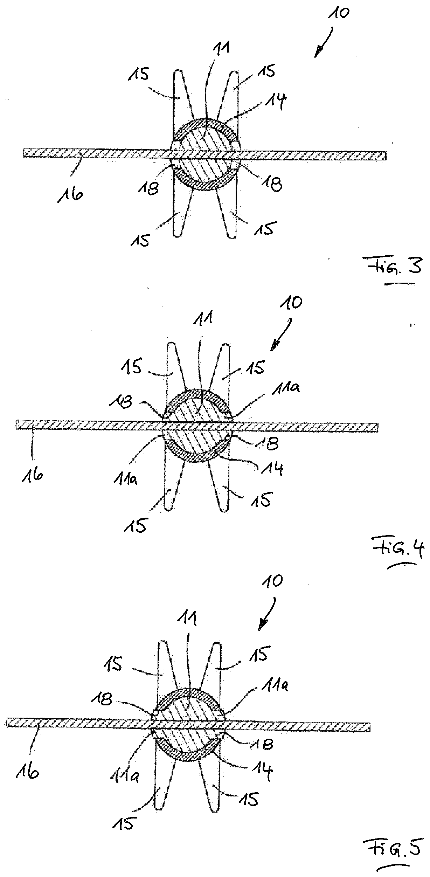

Wie insbesondere die Figuren 2 und 3 zeigen, sind in dem Überzug 14 mehrere Ausnehmungen 18 ausgebildet, die sich in radialer Richtung jeweils bis zum Träger 11 erstrecken und somit einen Freiraum bilden, der in Form eines Loches des Überzugs 14 ausgebildet ist.

Wie Figur 3 zeigt, sind jedem Borstenbündel 16 zwei entsprechende Ausnehmungen 18 auf diametral entgegengesetzten Seiten des Trägers 11 bzw. des Überzugs 14 zugeordnet. Das Borstenbündel 16 verläuft durch die Ausnehmungen 18 und den Träger 11, ohne den Überzug 14 zu berühren, d.h. das Borstenbündel 16 ist in einem Abstand vom Rand der Ausnehmung 18 angeordnet.

Bei dem in Figur 2 dargestellten Ausführungsbeispiel, sind jedem Borstenbündel 16 zwei diametral entgegengesetzte Ausnehmungen 18 zugeordnet, d.h. in jeder Ausnehmung 18 ist nur ein Borstenbündel 16 angeordnet.

In dem Ausführungsbeispiel gemäß Figur 3 bildet die Ausnehmung 18 im Überzug 14 einen Freiraum. In Weiterbildung dieser Ausgestaltung ist gemäß Figur 4 vorgesehen, das an dem Träger 11 radiale Ansätze 11a angeformt sind, die jeweils eine Ausnehmung 18 vollständig ausfüllen. Die Außenoberfläche der Ansätze 11a geht glatt und stetig in die Außenoberfläche des Überzugs 14 über, wie es in Figur 4 dargestellt ist. Auf diese Weise ist eine größere Einspannlänge des Borstenbündels 16 im Träger 11 und somit eine bessere Halterung des Borstenbündels 16 erreicht.

Bei dem in Figur 5 dargestellten Ausführungsbeispiel füllt der Ansatz 11a des Trägers 11 die Ausnehmung 18 des Überzugs 14 nicht nur aus, sondern steht sogar aus der Ausnehmung 18 radial hervor. Auf diese Weise kann die Einspannlänge des Borstenbündels 16 im Material des Trägers 11 noch weiter erhöht werden.

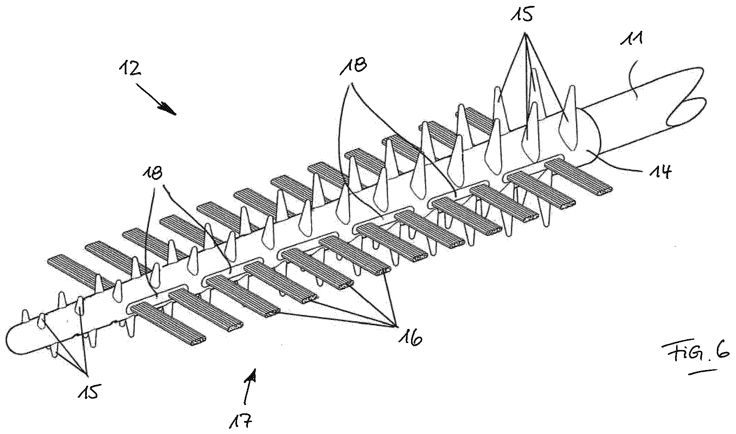

Bei dem in Figur 2 dargestellten Ausführungsbeispiel ist in jeder Ausnehmung 18 nur ein einzelnes Borstenbündel 16 angeordnet. Figur 6 zeigt ein Ausführungsbeispiel, bei dem jede Ausnehmung 18 eine längliche, in Längsrichtung des Trägers 11 verlaufende Form besitzt, wobei in jeder Ausnehmung 18 zwei Borstenbündel 16 angeordnet sind, die voneinander beabstandet sind.

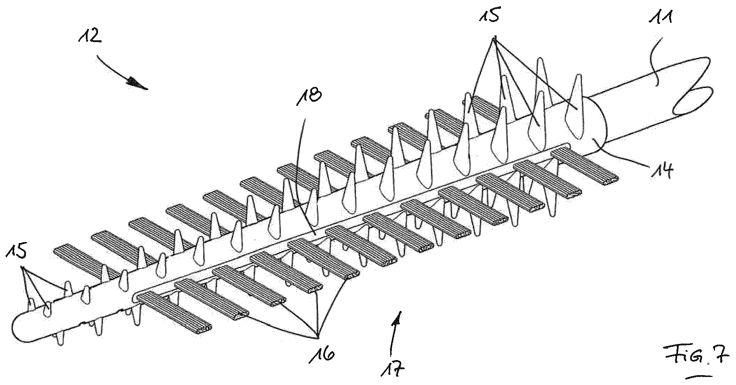

Figur 7 zeigt eine Weiterbildung des Ausführungsbeispiels gemäß Figur 6, wobei nunmehr nur zwei auf diametral entgegengesetzten Seiten des Überzugs 14 angeordnete linienförmige Ausnehmungen 18 ausgebildet sind, die gradlinig in Längsrichtung des Trägers 11 verlaufen. In den beiden linienförmigen Ausnehmungen 18 sind alle Borstenbündel 16 in jeweils gegenseitigem Abstand und mit Abstand vom Rand der Ausnehmungen 18 angeordnet.

## Patentansprüche

1. Interdental-Reiniger (10) mit einem stabförmigen, aus Kunststoff bestehenden Träger (11), der in einem axialen Endbereich eine Reinigungseinrichtung (12) aufweist, die einen aus einem weich-elastischen Kunststoff bestehenden Überzug (14) des Trägers (11) und einen Borstenbesatz mit mehreren mit radialer Komponente vom Überzug (14) hervorstehenden Borstenbündeln (16) aufweist, wobei die Borstenbündel (16) den Träger (11) durchdringen und in diesem eingebettet und gehalten sind, wobei der Überzug (14) auf seiner Außenoberfläche zumindest eine Ausnehmung (18) aufweist und dass zumindest eines der Borstenbündel (16) innerhalb der Ausnehmung (18) angeordnet ist, **dadurch gekennzeichnet, dass** das Borstenbündel (16) in einem Abstand von einem Rand der Ausnehmung (18) angeordnet ist.

2. Interdental-Reiniger nach Anspruch 1, **dadurch gekennzeichnet, dass** die Ausnehmung (18) sich bis zum Träger (11) erstreckt.

3. Interdental-Reiniger nach Anspruch 1 oder 2, **dadurch gekennzeichnet, dass** die Ausnehmung (18) einen Freiraum bildet.

4. Interdental-Reiniger nach einem der Ansprüche 1 bis 3, **dadurch gekennzeichnet, dass** die Ausnehmung (18) zumindest teilweise von einem Ansatz (11a) des Trägers (11) ausgefüllt ist.

5. Interdental-Reiniger nach Anspruch 4, **dadurch gekennzeichnet, dass** der Ansatz (11a) des Trägers (11) aus der Ausnehmung (18) radial hervorsteht.

6. Interdental-Reiniger nach einem der Ansprüche 1 bis 5, **dadurch gekennzeichnet, dass** mehrere Ausnehmungen (18) vorgesehen sind.

7. Interdental-Reiniger nach einem der Ansprüche 1 bis 6, **dadurch gekennzeichnet, dass** in der Ausnehmung (18) nur ein Borstenbündel (18) angeordnet ist.

8. Interdental-Reiniger nach einem der Ansprüche 1 bis 6, **dadurch gekennzeichnet, dass** in der Ausnehmung (18) mehrere, voneinander beabstandete Borstenbündel (16) angeordnet sind.

9. Interdental-Reiniger nach einem der Ansprüche 6 bis 8, **dadurch gekennzeichnet, dass** die Ausnehmungen (18) auf diametral entgegengesetzten Seiten des Überzugs (14) angeordnet sind.

10. Interdental-Reiniger nach einem der Ansprüche 1 bis 9, **dadurch gekennzeichnet, dass** zumindest eine der Ausnehmungen (18) linienförmige ausgebildet ist und sich in Längsrichtung des Trägers (11) erstreckt.

11. Interdental-Reiniger nach einem der Ansprüche 1 bis 10, **dadurch gekennzeichnet, dass** der Überzug mehrere mit radialer Komponente vom Überzug (14) hervorstehende Finger (15) und/oder Noppen und/oder Lamellen aufweist.

12. Interdental-Reiniger nach Anspruch 11, **dadurch gekennzeichnet, dass** die Finger (15) einstückig mit dem Überzug (14) ausgebildet sind.

## Claims

1. Interdental cleaner (10) comprising a rod-shaped support (11) made of plastics material, which has a cleaning device (12) in an axial end region, which cleaning device has a covering (14) for the support (11) made of a soft-elastic plastics material and a bristle set comprising a plurality of bristle bundles (16) protruding, with a radial component, from the covering (14), the bristle bundles (16) extending through the support (11) and being embedded and held therein, wherein the covering (14) has at least one recess (18) in its outer surface, and in that at least one of the bristle bundles (16) is arranged within the recess (18), **characterized in that** the bristle bundle (16) is arranged at a distance from an edge of the recess (18).

2. Interdental cleaner according to claim 1, **characterized in that** the recess (18) extends as far as the support (11).

3. Interdental cleaner according to either claim 1 or claim 2, **characterized in that** the recess (18) forms a free space.

4. Interdental cleaner according to any of claims 1 to 3, **characterized in that** the recess (18) is at least partially filled by an extension piece (11a) of the support (11).

5. Interdental cleaner according to claim 4, **characterized in that** the extension piece (11a) of the support (11) protrudes radially from the recess (18).

6. Interdental cleaner according to any of claims 1 to 5, **characterized in that** a plurality of recesses (18) are provided.

7. Interdental cleaner according to any of claims 1 to 6, **characterized in that** only one bristle bundle (18) is arranged in the recess (18).

8. Interdental cleaner according to any of claims 1 to 6, **characterized in that** a plurality of bristle bundles (16) spaced apart from one another are arranged in the recess (18).

9. Interdental cleaner according to any of claims 6 to 8, **characterized in that** the recesses (18) are arranged on diametrically opposite sides of the covering (14).

10. Interdental cleaner according to any of claims 1 to 9, **characterized in that** at least one of the recesses (18) is linear and extends in the longitudinal direction of the support (11).

11. Interdental cleaner according to any of claims 1 to 10, **characterized in that** the covering has a plurality of fingers (15) and/or nubs and/or fins protruding, with a radial component, from the covering (14).

12. Interdental cleaner according to claim 11, **characterized in that** the fingers (15) are formed integrally with the covering (14).

## Revendications

1. Nettoyeur interdentaire (10) comportant un support (11) en forme de tige constitué de matière plastique et présentant, dans une zone d'extrémité axiale, un dispositif de nettoyage (12) qui présente un revêtement (14) du support (11) constitué d'une matière plastique souple et élastique et une garniture de poils comportant plusieurs paquets de poils (16) dépassant du revêtement (14) avec une composante radiale, dans lequel les paquets de poils (16) traversent le support (11) et sont encastrés et maintenus dans celui-ci, dans lequel le revêtement (14) présente sur sa surface extérieure au moins un évidement (18) et en ce qu'au moins l'un des paquets de poils (16) est disposé à l'intérieur de l'évidement (18), **caractérisé en ce que** le paquet de poils (16) est disposé à distance d'un bord de l'évidement (18).

2. Nettoyeur interdentaire selon la revendication 1, **caractérisé en ce que** l'évidement (18) s'étend jusqu'au support (11).

3. Nettoyeur interdentaire selon la revendication 1 ou 2,
**caractérisé en ce que** l'évidement (18) forme un espace libre.

4. Nettoyeur interdentaire selon l'une des revendications 1 à 3,
**caractérisé en ce que** l'évidement (18) est au moins partiellement rempli par une saillie (11a) du support (11).

5. Nettoyeur interdentaire selon la revendication 4, **caractérisé en ce que** la saillie (11a) du support (11) dépasse radialement de l'évidement (18).

6. Nettoyant interdentaire selon l'une des revendications 1 à 5,
**caractérisé en ce que** plusieurs évidements (18) sont prévus.

7. Nettoyeur interdentaire selon l'une des revendications 1 à 6,
**caractérisé en ce qu'**exactement un paquet de poils (18) est disposé dans l'évidement (18).

8. Nettoyant interdentaire selon l'une des revendications 1 à 6,
**caractérisé en ce que** plusieurs paquets de poils (16) espacés les uns des autres sont disposés dans l'évidement (18).

9. Nettoyant interdentaire selon l'une des revendications 6 à 8,
**caractérisé en ce que** les évidements (18) sont disposés sur des côtés diamétralement opposés du revêtement (14).

10. Nettoyeur interdentaire selon l'une des revendications 1 à 9,
**caractérisé en ce qu'au** moins l'un des évidements (18) est réalisé sous forme linéaire et s'étend dans la direction longitudinale du support (11).

11. Nettoyant interdentaire selon l'une des revendications 1 à 10,
**caractérisé en ce que** le revêtement présente plusieurs doigts (15) et/ou picots et/ou lamelles dépassant du revêtement (14) avec une composante radiale.

12. Nettoyant interdentaire selon la revendication 11, **caractérisé en ce que** les doigts (15) sont réalisés d'une seule pièce avec le revêtement (14).
